# EUROPEAN PATENT SPECIFICATION

(11) **EP 4 207 708 B1**
(45) Date of publication and mention of the grant of the patent: **09.04.2025**
(21) Application number: 21871121.6
(22) Date of filing: 11.08.2021
(51) Int. Cl.: H04L 65/40, H04L 45/74, H04L 61/5007, H04L 67/141

(54) **METHOD FOR ESTABLISHING SESSION AND NETWORK DEVICE**
VERFAHREN ZUR HERSTELLUNG EINER SITZUNG UND NETZWERKVORRICHTUNG
PROCÉDÉ D'ÉTABLISSEMENT D'UNE SESSION ET DISPOSITIF DE RÉSEAU

(30) Priority: 25.09.2020 CN 202011024146
(43) Date of publication of application: 05.07.2023
(73) Proprietor: Huawei Technologies Co., Ltd., Shenzhen, Guangdong 518129 (CN)
(72) Inventor: ZHANG, Yongkang, Shenzhen, Guangdong 518129 (CN); WANG, Haibo, Shenzhen, Guangdong 518129 (CN)
(74) Representative: Epping - Hermann - Fischer
(86) International application number: PCT/CN2021/111935
(87) International publication number: WO 2022/062744

(56) References cited:
- EP-A1- 3 410 654
- EP-A1- 3 522 459
- EP-A1- 3 975 514
- CN-A- 104 468 368
- CN-A- 110 661 714
- CN-A- 110 830 598
- CN-A- 110 830 598
- US-A1- 2019 245 784
- REKHTER Y ET AL: "A Border Gateway Protocol 4 (BGP-4); rfc4271.txt", A BORDER GATEWAY PROTOCOL 4 (BGP-4)?; RFC4271.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 January 2006 (2006-01-01), XP015054920
- K. PATEL ARRCUS, INC. A. LINDEM CISCO SYSTEMS S. ZANDI G. DAWRA LINKEDIN: "Usage and Applicability of Link State Vector Routing in Data Centers; draft-ietf-lsvr-applicability-06.txt", USAGE AND APPLICABILITY OF LINK STATE VECTOR ROUTING IN DATA CENTERS; DRAFT-IETF-LSVR-APPLICABILITY-06.TXT; INTERNET-DRAFT: LSVR, INTERNET ENGINEERING TASK FORCE, IETF; STANDARDWORKINGDRAFT, INTERNET SOCIETY (ISOC) 4, RUE DES FALAISES CH- 1205 GENEVA, no. 06, 26 July 2020 (2020-07-26), Internet Society (ISOC) 4, rue des Falaises CH- 1205 Geneva, Switzerland , pages 1 - 14, XP015140936

## Description

### TECHNICAL FIELD

This application relates to the communications field, and in particular, to a session establishment method and a network device.

### BACKGROUND

A border gateway protocol (Border Gateway Protocol, BGP) is a routing protocol that implements routing exchange between network devices within or between autonomous systems (Autonomous Systems, ASs). Two adjacent network devices that exchange packets are referred to as peers (peers). A BGP session (session) needs to be established before peers communicate with each other. To establish the BGP session, in a conventional technology, not only an internet protocol (Internet Protocol, IP) address of an interface of a network device needs to be manually configured in advance on the network device, but also an IP address of an interface of a peer of the network device needs to be manually configured. After the configuration is completed, the network device initiates a BGP session establishment request to the peer based on the IP address of the interface of the peer, to establish the BGP session with the peer. However, the conventional BGP session establishment method is inefficient and is not applicable to a current increasingly large BGP network architecture.

CN 110830598 A discloses a method for establishing a BGP session, a method for sending an interface address and an alias and network equipment. The method for establishing a BGP session comprises the steps that a first node receives a first interface address and a first interface address alias of a first inline interface from a second node; the first node detects whether a second interface address alias of a second inline interface of the first node is matched with the first interface address alias or not; and when the second interface address alias is matched with the first interface address alias, the first node establishes a BGP session between the second inline interface and the first inline interface according to the first interface address.

EP 3975514 A1, which is prior art according to Article 54(3) EPC, discloses that a first router receives a targeted message that is unicast from a second router that is multiple network hops away from the first router. The first router establishes a transport layer connection between the first router and the second router in response to the targeted message. The first router then establishes a session over the transport layer connection. The session operates according to a border gateway protocol (BGP). In some cases, the targeted message includes information such as an IP address of the first router, a transport layer parameter, an ASN associated with the second router, and an identifier of the routing protocol associated with the second router.

The paper "A Border Gateway Protocol 4 (BGP-4)" by Y. Rekhter et al., (XP015054920), specifies an Internet standards track protocol and discusses the Border Gateway Protocol (BGP), as an inter-Autonomous System routing protocol.

EP3522459 A1 discloses a network device that includes one or more processors configured to select a prioritized sub-set of a plurality of routing protocol sessions based on peer priority information. The one or more processors are configured to establish one or more routing protocol sessions of the prioritized sub-set. The one or more processors are configured to, in response to determining that a threshold for establishing the prioritized sub-set of the plurality of routing protocol sessions is satisfied, establish one or more routing protocol sessions of the plurality of routing protocol sessions that are not included in the prioritized sub-set. The one or more processors are configured to forward network traffic using the established one or more routing protocol sessions of the prioritized sub-set and the established one or more routing protocol sessions of the plurality of routing protocol sessions that are not included in the prioritized sub-set.

EP3410654 A1 discloses a method that includes selecting, by a first virtual routing node of a single-chassis network device having a plurality of forwarding components and a plurality of fabric links coupling respective pairs of the plurality of forwarding components at respective fabric interfaces of the plurality of forwarding components, a fabric interface of a forwarding component of the plurality of forwarding components that has an egress interface toward a network destination and that is associated with the first virtual routing node; advertising, to the second virtual routing node, the fabric interface as a next hop for the network destination and a label for use in establishing a transport label switched path (LSP); and computing, by the second virtual routing node, a path for the transport LSP to include the fabric interface, and establishing the transport LSP along the computed path.

### SUMMARY

This application provides a session establishment method and a network device, to improve BGP session establishment efficiency. The invention is defined by the subject-matter of the appended claims. According to a first aspect, a session establishment method is provided. The method is applied to a first network device, and specifically includes the following steps. The first network device receives a first message from a second network device, where the first message includes configuration information corresponding to a first interface. The second network device is connected to the first network device through the first interface, and the configuration information corresponding to the first interface includes an IP address of the first interface. The first interface may be a physical interface or a logical interface. Therefore, the IP address of the first interface may be an IP address corresponding to the physical interface or an IP address corresponding to the logical interface. If the method provided in this application is applied to internet protocol version 4 (Internet Protocol version 4, IPv4), the IP address of the first interface is an IPv4 address. If the method provided in this application is applied to IPv6, the IP address of the first interface is an IPv6 address. The IP address of the first interface may be preconfigured, or may be automatically generated. After obtaining the configuration information corresponding to the first interface, the first network device establishes a border gateway protocol BGP session with the second network device based on the configuration information corresponding to the first interface. In this application, the configuration information of the first interface of the second network device does not need to be manually configured on the first network device, but the configuration information of the first interface is automatically obtained, to complete BGP session establishment. Compared with a conventional technology, this reduces labor costs, improves a success rate of BGP session establishment, and improves BGP session establishment efficiency.

According to the first aspect, the method further includes: The first network device sends a second message to the second network device, where the second message includes configuration information corresponding to a second interface, the first network device is connected to the second network device through the second interface, and the configuration information corresponding to the second interface includes an IP address of the second interface, so that the second network device completes establishment of the BGP session with the first network device based on the IP address of the second interface.

In a possible design, the first message further includes indication information, and the indication information indicates the first network device to establish the BGP session with the second network device based on the configuration information corresponding to the first interface. After receiving the first message, based on the indication information, the first network device establishes the BGP session with the second network device based on the configuration information corresponding to the first interface.

In a possible design, the first message is a neighbor discovery (Neighbor Discovery, ND) message. Certainly, the first message is not limited to the ND message, and a person skilled in the art may design the first message based on an actual situation.

In a possible design, the ND message includes a neighbor advertisement (Neighbor Advertisement, NA) message or a router advertisement (Router Advertisement, RA) message.

In a possible design, the configuration information corresponding to the first interface is carried in a type length value (type length value, TLV) of the ND message, or certainly may be carried in another field of the ND message. This is not specifically limited in this application.

To save network resources, in a possible design, before that the first network device establishes a BGP session with the second network device based on the configuration information corresponding to the first interface, the method further includes: The first network device determines that a priority of the first network device is higher than a priority of the second network device. To be specific, if the priority of the first network device is higher than the priority of the second network device, the first network device may be used as a party that actively initiates a BGP session establishment request, and the second network device does not actively initiate the BGP session establishment request, to avoid a resource waste caused by initiating the BGP session establishment request by both parties.

In a possible implementation, the first message further includes the priority of the second network device. The first network device may compare the priority of the first network device with the priority of the second network device that is included in the first message, to determine that the priority of the first network device is higher than the priority of the second network device.

In another possible implementation, that the first network device determines that a priority of the first network device is higher than a priority of the second network device includes: The first network device determines that a value of the IP address of the second interface is greater than a value of the IP address of the first interface, where the second interface is an interface that is of the first network device and that is for receiving the first message. In other words, if the first network device determines that the value of the IP address of the second interface is greater than the value of the IP address of the first interface, the first network device determines that the priority of the first network device is higher than the priority of the second network device.

In a possible design, the configuration information corresponding to the first interface further includes an autonomous system AS identifier of the second network device. The AS identifier may be an autonomous system number (as-number, ASN).

In a possible design, the method provided in this application may be applied to a data center network (Data Center Network, DCN). In this scenario, the second network device is a spine node, and the first network device is a leaf node; or the second network device is a leaf node, and the first network device is a spine node. Certainly, the method provided in this application may alternatively be applied to another BGP network other than the DCN network. This is not specifically limited in this application.

As mentioned above, the first interface may be a logical interface. In a possible design, the first interface is a loopback (loopback) interface.

In a possible design, a destination address of the first message is an IPv6 all-nodes multicast address (all-nodes multicast address). In other words, the second network device may send the first message to all peers (including the first network device) connected to the first interface, to establish BGP sessions with these peers.

According to a second aspect, a session establishment method is provided. The method is applied to a second network device, and specifically includes the following steps. The second network device obtains configuration information corresponding to a first interface, where the second network device is connected to a first network device through the first interface, and the configuration information corresponding to the first interface includes an IP address of the first interface. The second network device sends a first message to the first network device, where the first message includes the configuration information corresponding to the first interface, and the configuration information corresponding to the first interface is used by the first network device to establish a border gateway protocol BGP session with the second network device. It can be learned that in this application, the configuration information of the first interface of the second network device does not need to be manually configured on the first network device, but the second network device sends the configuration information of the first interface to the first network device, to complete BGP session establishment. Compared with a conventional technology, this reduces labor costs, improves a success rate of BGP session establishment, and improves BGP session establishment efficiency.

In a possible design, the first message further includes indication information, and the indication information indicates the first network device to establish the BGP session with the second network device based on the configuration information corresponding to the first interface.

In a possible design, when the first interface is a physical interface, before the second network device sends the first message to the first network device, the second network device may determine that the first interface is in an IPv6 connected mode, in other words, determine that the first interface has a capability of sending the first message.

In a possible design, when the first interface is a logical interface, before the second network device sends the first message to the first network device, the second network device may determine that a physical interface corresponding to the first interface is in an IPv6 connected mode, in other words, the physical interface corresponding to the first interface has a capability of sending the first message.

In a possible design, the logical interface is a loopback loopback interface.

According to the second aspect, the method further includes: The second network device receives a second message from the first network device, where the second message includes configuration information corresponding to a second interface, the first network device is connected to the second network device through the second interface, and the configuration information corresponding to the second interface includes an IP address of the second interface. In other words, the first network device may alternatively send, to the second network device, a configuration of an interface through which the first network device is connected to the second network device, so that the second network device can obtain configuration information of the interface without manual configuration.

In a possible design, after receiving the second message, the method further includes: The second network device listens to a transmission control protocol (Transmission Control Protocol, TCP) port based on the IP address of the second interface, to receive a BGP session establishment request from the first network device, and establishes the BGP session based on the BGP session establishment request.

In a possible design, the first message further includes a priority of the second network device. The priority of the second network device is used by the first network device to determine whether the first network device actively initiates the BGP session establishment request.

In a possible design, the configuration information of the first interface further includes an autonomous system identifier of the second network device.

According to a third aspect, a first network device is provided. The first network device includes: a receiving unit, configured to receive a first message from a second network device, where the first message includes configuration information corresponding to a first interface, the second network device is connected to the first network device through the first interface, and the configuration information corresponding to the first interface includes an internet protocol IP address of the first interface; and a processing unit, configured to establish a border gateway protocol BGP session with the second network device based on the configuration information corresponding to the first interface. According to the third aspect, the first network device further includes a sending unit, configured to send a second message to the second network device, where the second message includes configuration information corresponding to a second interface, the first network device is connected to the second network device through the second interface, and the configuration information corresponding to the second interface includes an IP address of the second interface. In a possible design, the first message further includes indication information, and the indication information indicates the first network device to establish the BGP session with the second network device based on the configuration information corresponding to the first interface.

In a possible design, the processing unit is further configured to: before establishing the BGP session with the second network device based on the configuration information corresponding to the first interface, determine that a priority of the first network device is higher than a priority of the second network device.

In a possible design, the first message further includes the priority of the second network device.

In a possible design, that the processing unit determines that the priority of the first network device is higher than the priority of the second network device includes: The processing unit determines that a value of the IP address of the second interface is greater than a value of the IP address of the first interface, where the second interface is an interface that is of the first network device and that is for receiving the first message.

According to a fourth aspect, a second network device is provided. The second network device includes: a processing unit, configured to obtain configuration information corresponding to a first interface, where the second network device is connected to a first network device through the first interface, and the configuration information corresponding to the first interface includes an internet protocol IP address of the first interface; and a sending unit, configured to send a first message to the first network device, where the first message includes the configuration information corresponding to the first interface, and the configuration information corresponding to the first interface is used by the first network device to establish a border gateway protocol BGP session with the second network device. In a possible design, the first message further includes indication information, and the indication information indicates the first network device to establish the BGP session with the second network device based on the configuration information corresponding to the first interface.

In a possible design, the first interface is a physical interface.

The sending unit is further configured to: before the second network device sends the first message to the first network device, determine that the first interface is in an internet protocol version 6 IPv6 connected mode.

In a possible design, the first interface is a logical interface.

The sending unit is further configured to: before the second network device sends the first message to the first network device, determine that a physical interface corresponding to the first interface is in an IPv6 connected mode.

According to the fourth aspect, the second network device further includes a receiving unit, configured to receive a second message from the first network device, where the second message includes configuration information corresponding to a second interface, the first network device is connected to the second network device through the second interface, and the configuration information corresponding to the second interface includes an IP address of the second interface.

In a possible design, the processing unit is further configured to listen to a transmission control protocol TCP port based on the IP address of the second interface, to receive a BGP session establishment request from the first network device, and establish the BGP session based on the BGP session establishment request.

In a possible design, the first message further includes a priority of the second network device.

For a possible implementation of the first message and a location at which the first message carries the configuration information of the first interface in the second aspect to the fourth aspect, refer to related descriptions of the first aspect. Details are not described herein again.

According to a fifth aspect, a network system is provided. The system includes the first network device and the second network device that are provided in the foregoing aspects.

According to a sixth aspect, a computer-readable storage medium is provided, including instructions, a program, or code. When the instructions, program, or code is executed on a computer, the computer is enabled to perform the method in the foregoing aspects.

According to a seventh aspect, a computer program product including computer instructions is provided. When the computer program product is run on a network device, the network device is enabled to perform the method provided in any one of the first aspect, the second aspect, and the possible implementations of the foregoing two aspects.

According to an eighth aspect, a chip is provided, including a memory and a processor. The memory is configured to store instructions or program code. The processor is configured to invoke and run the instructions or program code from the memory, to perform the method in any one of the first aspect or the possible designs of the first aspect; or the processor performs the method in any one of the second aspect or the possible designs of the second aspect.

In a possible design, the chip includes only a processor. The processor is configured to read and execute the instructions or the program code stored in the memory. When the instructions or the program code is executed, the processor performs the method in any one of the first aspect or the possible designs of the first aspect; or the processor performs the method in any one of the second aspect or the possible designs of the second aspect; or the processor performs the method in any one of the third aspect or the possible designs of the third aspect.

### BRIEF DESCRIPTION OF DRAWINGS

FIG. 1 is a schematic diagram of a structure of a network architecture according to an embodiment of this application;
FIG. 2 is a flowchart of a session establishment method according to an embodiment of this application;
FIG. 3 is a schematic diagram of a format of a NA message according to an embodiment of this application;
FIG. 4 is a schematic diagram of a format of a RA message according to an embodiment of this application;
FIG. 5 is a schematic diagram of a TLV format in an IPv4 scenario according to an embodiment of this application;
FIG. 6 is a schematic diagram of a TLV format in an IPv6 scenario according to an embodiment of this application;
FIG. 7 is a schematic diagram of a structure of a first network device 700 according to an embodiment of this application;
FIG. 8 is a schematic diagram of a structure of a second network device 800 according to an embodiment of this application;
FIG. 9 is a schematic diagram of a structure of a network system 900 according to an embodiment of this application;
FIG. 10 is a schematic diagram of a structure of a device 1000 according to an embodiment of this application; and
FIG. 11 is a schematic diagram of a structure of a device 1100 according to an embodiment of this application.

### DESCRIPTION OF EMBODIMENTS

In a conventional technology, before a BGP session is established, an IP address of an interface of a network device and an IP address of an interface of a peer need to be manually configured on the network device in advance. The IP address of the interface is an IP address corresponding to an interface that is on the network device and that communicates with the peer. When a same network device has a plurality of interfaces, IP addresses corresponding to different interfaces may be the same or may be different. For example, a user may configure the following command on the network device: peer ipv6-address as-number. This command is executed, so that the network device configures an internet protocol version 6 (Internet Protocol version 6, IPv6) address and an autonomous system number (as-number, ASN) of a peer on the network device.

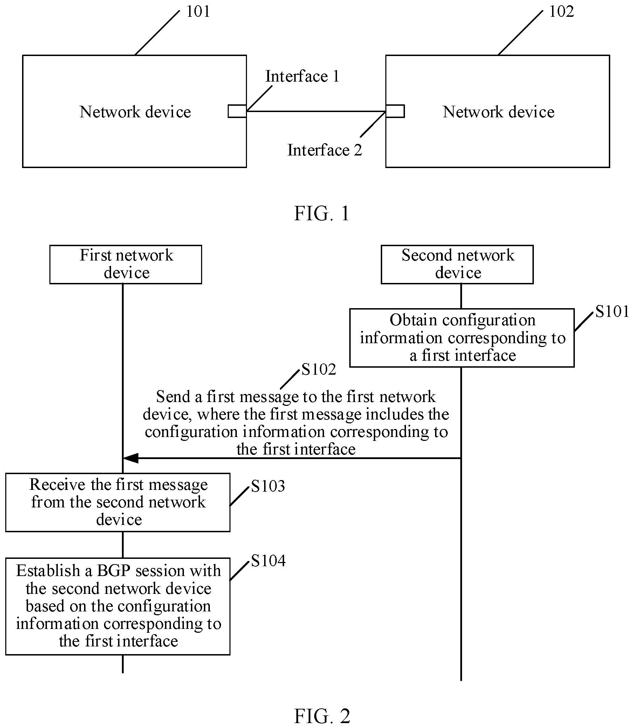

For example, as shown in FIG. 1, a network device 101 and a network device 102 are peers of each other, the network device 101 has an interface 1, the network device 102 has an interface 2, and the interface 1 of the network device 101 is connected to the interface 2 of the network device 102. Before the network device 101 establishes a BGP session with the network device 102, an IP address of the interface 1 and an IP address of the interface 2 of the network device 102 need to be manually configured on the network device 101 in advance. Then, the network device 101 sends a BGP session establishment request to the network device 102 based on the IP address of the interface 2, where the BGP session establishment request includes the IP address of the interface 1, to establish the BGP session with the network device 102. Certainly, the IP address of the interface 2 and the IP address of the interface 1 of the network device 101 may alternatively be manually configured on the network device 102, to complete establishment of the BGP session.

When there are a large quantity of peers, manual workload of configuring IP addresses of interfaces of peers is increased, and this reduces BGP session establishment efficiency. In addition, in a process of configuring an IP address of an interface of a peer, the configuration may be incorrect. This causes a problem that a BGP session cannot be established.

To overcome the foregoing technical problem, embodiments of this application provide a session establishment method. In this method, a BGP session can be established without a need to manually configure an IP address of a peer on a network device. This reduces labor costs, and improves BGP session establishment efficiency.

FIG. 2 is a flowchart of a session establishment method according to an embodiment of this application.

In FIG. 2, the session establishment method provided in this embodiment of this application includes the following steps.

S101: A second network device obtains configuration information corresponding to a first interface.

In this embodiment of this application, a first network device and the second network device each may be a device such as a router (router) or a switch (switch). The method provided in this embodiment of this application may be applied to a data center network (Data Center Network, DCN). In this application scenario, the first network device may be, for example, a spine (spine) node, and the second network device may be, for example, a leaf (leaf) node. Alternatively, the first network device is a leaf node, and the second network device is a spine node. Certainly, the first network device and the second network device are not limited to a DCN network architecture, and may also be applicable to another BGP network architecture.

The second network device communicates with the first network device through the first interface. The first interface may be a physical interface, or may be a logical interface. If the first interface is a logical interface, the first interface may be a loopback (loopback) interface, and the second network device is connected to the first network device through a physical interface corresponding to the loopback interface.

The second network device may be, for example, the network device 101 in FIG. 1. The first network device may be, for example, the network device 102. The first interface may be the foregoing interface 1.

In this embodiment of this application, the first network device obtains the configuration information corresponding to the first interface, where the configuration information corresponding to the first interface includes an IP address of the first interface, and the configuration information corresponding to the first interface is used by the first network device to establish a BGP session with the second network device.

As mentioned above, the first interface may be a physical interface or a logical interface. Therefore, the IP address of the first interface may be an IP address corresponding to the physical interface or an IP address corresponding to the logical interface.

If the method provided in this embodiment of this application is applied to internet protocol version 4 (Internet

Protocol version 4, IPv4), the IP address of the first interface is an IPv4 address. If the method provided in this embodiment of this application is applied to IPv6, the IP address of the first interface is an IPv6 address. The IP address of the first interface may be preconfigured, or may be automatically generated.

If the IP address of the first interface is preconfigured, and the first interface is a physical interface, during actual application, a user may configure the following command on the second network device: ip address <ip-address> bgp auto-discovery. The command means that the ip-address is specified as a local source address for establishing a single-hop BGP session. The command is executed, so that the second network device can configure the IP address of the first interface.

If the IP address of the first interface is preconfigured, and the first interface is a logical interface, during actual application, a user may configure the following command on the second network device: ip address <ip-address> bgp auto-discovery outbound <ifname>. The command means that the ip-address is specified as an IP address for establishing a single-hop BGP session, and <ifname> represents a physical interface corresponding to the first interface. The command is executed, so that the second network device can configure the IP address of the first interface.

Optionally, the configuration information corresponding to the first interface further includes one or more pieces of information such as an AS identifier of the second network device and a priority of the second network device. The priority of the second network device is for determining an initiator of a BGP session request. Details are described below, and are not described herein.

S102: The second network device sends a first message to the first network device.

In this embodiment of this application, the first message may be, but is not limited to, a neighbor discovery (Neighbor Discovery, ND) message, and may be specifically a neighbor advertisement (Neighbor Advertisement, NA) message or a router advertisement (Router Advertisement, RA) message in the ND message. The NA message or the RA message may be an unsolicited (unsolicited) message. In this embodiment of this application, the first message carries the configuration information corresponding to the first interface. Because the configuration information corresponding to the first interface includes the IP address of the first interface, the second network device sends the first message to the first network device, to advertise the IP address of the first interface to the first network device, so that the first network device can establish the BGP session with the second network device based on the IP address of the first interface.

In addition to the configuration information corresponding to the first interface, optionally, the first message further includes indication information. The indication information indicates the first network device to establish the BGP session with the second network device based on the configuration information corresponding to the first interface. In this embodiment of this application, the configuration information of the first interface and the indication information may be carried in a type length value (type length value, TLV) of the first message.

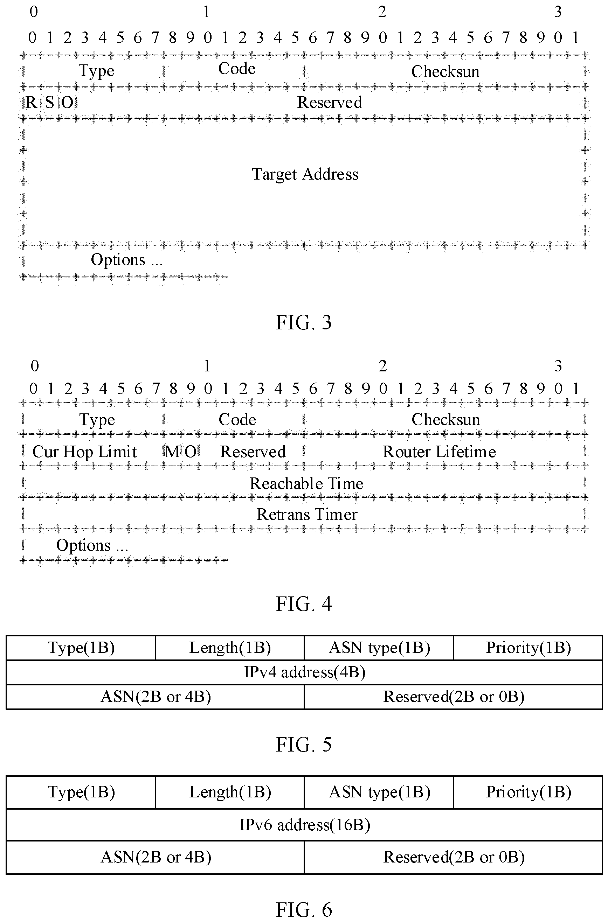

FIG. 3 is a schematic diagram of a format of a NA message. In this figure, the NA message includes a type (type) field, a code (code) field, a checksum (checksum) field, an R field, an S field, an O field, a reserved (reserved) field, a destination address (target address) field, and an options (options) field. The options field is the TLV, and the configuration information of the first interface and the indication information may be carried in the TLV.

FIG. 4 is a schematic diagram of a format of a RA message. In this figure, the RA message includes a type field, a code field, a checksum field, a current hop limit (Cur Hop Limit) field, an M field, an O field, a reserved field, a router lifetime (router lifetime) field, a reachable time (reachable time) field, a retransmission timer (retrans timer) field, and an options field. The options field is the TLV, and the configuration information of the first interface and the indication information may be carried in the TLV.

If this embodiment of this application is applied to an IPv4 scenario, FIG. 5 is a schematic diagram of a TLV format. In this figure, a TLV includes a type field, a length field, an ASN type field, an IPv4 address field, an ASN field, and a reserved field. The type field is for carrying the indication information, and the field may occupy 1 byte (byte, B). A value of the length field is a length of the TLV, and the field may occupy 1 byte. A value of the ASN type field is an ASN type, for example, may be a 2-byte ASN or a 4-byte ASN, and the field may occupy 1 byte. A value of the IPv4 address field is an IPv4 address of the first interface, and the field may occupy 4 bytes. The ASN field may carry an autonomous system identifier of the first interface, and the field may occupy 2 bytes or 4 bytes. If the first interface further includes other configuration information, the other configuration information may be carried in the reserved field. If the first interface does not include other configuration information, the TLV may not have the reserved field. If this embodiment of this application is applied to an IPv6 scenario, FIG. 6 is a schematic diagram of a TLV format. In this figure, a TLV includes a type field, a length field, an ASN type field, an IPv6 address field, an ASN field, and a reserved field. A difference between the TLV format shown in FIG. 6 and the TLV format shown in FIG. 5 is that the IP address of the first interface in the TLV in FIG. 6 is an IPv6 address, and is carried in the IPv6 address field. For other fields, refer to the foregoing descriptions of FIG. 5. Details are not described herein again.

It may be understood that the TLV format, and locations at which the TLV carries the configuration information of the first interface and the indication information do not constitute a limitation on the technical solutions of this application. A person skilled in the art may alternatively design the TLV format based on a specific application. Details are not described in this application.

If the first message is an ND message, before the second network device sends the first message to the first network device, the second network device may first determine whether the first interface has a capability of sending the first message to the first network device. Because the ND message can be sent only according to the IPv6 protocol, if the first interface is a physical interface, the second network device may determine, by determining whether the first interface is in an IPv6 connected mode, whether the first interface has the capability of sending the first message. If the first interface is in the IPv6 connected mode, it is considered that the first interface of the second network device has the capability of sending the first message, and an action of sending the first message to the first network device through the first interface can be performed; otherwise, the first message is not sent. If the first interface is a logical interface, for example, the loopback interface, the second network device may determine, by determining whether a physical interface corresponding to the first interface is in the IPv6 connected mode, whether the first interface has the capability of sending the first message. If the physical interface corresponding to the first interface is in the IPv6 connected mode, it is considered that the first interface of the second network device has the capability of sending the first message, and the action of sending the first message to the first network device through the first interface can be performed, that is, sending the first message to the first network device through the physical interface corresponding to the first interface, otherwise, the first message is not sent.

In addition, if the method provided in this embodiment of this application is applied to an IPv6 scenario, a destination address of the first message may be an IPv6 all-nodes multicast address (all-nodes multicast address) (for example, FF02:: 1). In other words, the second network device may send the first message to all peers (including the first network device) communicating with the first interface, that is, advertise the configuration information of the first interface of the second network device to these peers, so that these peers can separately establish BGP sessions with the second network device based on the configuration information of the first interface.

Before the first message is sent to all the peers (including the first network device) communicating with the first interface, the following command may be configured on the second network device: peer <out-ifname> auto-discovery. The command means that all the peers communicating with the first interface are to be automatically discovered. If the first interface is a logical interface, <out-ifname> represents a physical interface corresponding to the first interface, that is, <ifname> above. If the first interface is a physical interface, <out-ifname> represents the physical interface. The command is executed, so that the second network device can obtain information (excluding IP addresses of the peers) about the peers (including the first network device) communicating with the first interface, and perform, based on the information about the peers, an action of subsequently sending the first message to these peers.

In addition, the following command may further be configured on the second network device: peer <out-ifname> description <description-text>. The command indicates that a correspondence between the first interface and the obtained information about the peers can be established. The command is executed, so that the second network device can establish and store the correspondence, and the second network device can send the first message to the peers corresponding to the first interface based on the correspondence.

Optionally, the following command may further be configured on the second network device: peer <out-ifname> tcp-mss <tep-mss-number>. The command is for configuring a maximum segment size (Maximum Segment Size, MSS) parameter of a transmission control protocol (Transmission Control Protocol, TCP) connection of the BGP session. The parameter is used by the second network device to establish the TCP connection to the first network device.

S103: The first network device receives the first message from the second network device.

S104: The first network device establishes the BGP session with the second network device based on the configuration information corresponding to the first interface.

In this embodiment of this application, the first network device receives the first message from the second network device. Because the first message carries the configuration information of the first interface, the first network device can establish the BGP session with the second network device based on the configuration information corresponding to the first interface. In other words, in this embodiment of this application, the configuration information of the first interface of the second network device does not need to be manually configured on the first network device, but the configuration information of the first interface is automatically obtained, to complete BGP session establishment. Compared with a conventional technology, this reduces labor costs, improves a success rate of BGP session establishment, and improves BGP session establishment efficiency.

When the first message further includes the indication information, the first network device may establish, based on the indication information, the BGP session with the second network device based on the configuration information corresponding to the first interface. For example, if the indication information is carried in the type field in the TLV of the first message, the first network device obtains, based on a value of the type field, the configuration information of the first interface that is included in the value, to perform a subsequent step of establishing the BGP session. During actual application, the first network device may alternatively send a second message to the second network device. The second message carries configuration information of the first network device. The configuration information of the first network device includes an IP address of a second interface. The second interface is an interface that is of the first network device and that communicates with the second network device, that is, an interface for receiving the first message. In this way, the second network device may alternatively establish a BGP session with the first network device based on configuration information of the second interface. Content included in the configuration information of the second interface is similar to that included in the configuration information of the first interface. To be specific, the configuration information of the second interface further includes, for example, an autonomous system identifier of the first network device. Details are not described herein again. Before sending the second message, the first network device may be configured with a command similar to the foregoing command configured on the second network device. Details are not described herein.

The second network device may further listen to a TCP port based on the IP address of the second interface, to receive a BGP session establishment request from the first network device, and complete a BGP session establishment action. That is, in this implementation, to establish the BGP session, both the second network device and the first network device need to send IP addresses of respective interfaces to each other.

To avoid a resource waste caused by that the first network device and the second network device initiate BGP session establishment requests to each other, during actual application, the first network device and the second network device may determine, based on respective priorities, a network device that is in the first network device and the second network device and that initiates the BGP session establishment request. Assuming that the priority of the first network device is higher than the priority of the second network device, the first network device may be a network device that initiates the BGP session establishment request to the peer. Certainly, a network device with a lower priority may alternatively be set as a network device that initiates the BGP session establishment request. This is not specifically limited in this application. For ease of description, the following uses an example in which a network device with a higher priority is a network device that initiates the BGP session establishment request for description.

The first network device is used as an example. In a possible implementation, the first network device may obtain the priority of the first network device in advance by configuration, or receive and store the priority of the first network device delivered by a device, for example, a controller. Similarly, the second network device may alternatively obtain the priority of the second network device in advance by configuration, or receive and store the priority of the second network device delivered by a device, for example, a controller. The second network device may include the priority of the second network device in the first message. For example, in FIG. 5 or FIG. 6, the TLV format further includes a priority (priority) field, and the priority field is for carrying the priority of the second network device. After receiving the first message, the first network device compares the priority of the first network device with the priority of the second network device, to obtain a comparison result. If the comparison result is that the priority of the first network device is higher than the priority of the second network device, the first network device sends the BGP session establishment request to the second network device based on the IP address of the first interface, to establish the BGP session with the second network device.

In another possible implementation, the first network device may determine values of the priority of the first network device and the priority of the second network device based on values of the IP address of the first interface and the IP address of the second interface. For example, the IP address of the first interface is greater than the IP address of the second interface. In this case, it may be considered that the priority of the first network device is higher than the priority of the second network device. Certainly, alternatively, it may be considered that the priority of the first network device is lower than the priority of the second network device. This is not specifically limited in this application. For ease of description, the former is used as an example in the following for description.

After receiving the first message, the first network device may compare the value of the IP address of the first interface with the value of the IP address of the second interface. If the IP address of the first interface is greater than the IP address of the second interface, the first network device sends the BGP session establishment request to the second network device, to establish the BGP session with the second network device. If the IP address of the first interface is less than the IP address of the second interface, establishment of the BGP session with the second network device is abandoned, and if the second message is not sent to the second network device before, the second message may be sent to the second network device, so that the second network device initiates establishment of the BGP session with the first network device.

In this embodiment of this application, there may be a plurality of implementations of comparing the value of the IP address of the first interface with the value of the IP address of the second interface.

In a possible implementation, bytes of the IP address of the first interface may be compared with bytes of the IP address of the second interface one by one based on a preset sequence. The preset sequence may be a sequence from a high-order bit to a low-order bit, or may be a sequence from a low-order bit to a high-order bit. If a value of a byte of the IP address of the first interface is different from a value of a byte at a same location of the IP address of the second interface, the value of the IP address may be determined based on the value of the byte.

For example, it is assumed that the IP address of the first interface is 100.4.4.6, and is converted into a 32-bit binary number 01100100.00000100.00000011.00000110. The IP address of the second interface is 100.3.5.6, and is converted into a 32-bit binary number 01100100.00000011.00000101.00000110. Based on a sequence from a high-order bit to a low-order bit, a value of the first byte of the IP address of the first interface and a value of the first byte of the IP address of the second interface are first determined. Because the two bytes are the same and are both 01100100, a value of the second byte 00000100 of the IP address of the first interface and a value of the second byte **00000011** of the IP address of the second interface are compared with each other. It is clearly that the former is greater than the latter. Therefore, it may be determined that the IP address of the first interface is greater than the IP address of the second interface.

In another possible implementation, hash (hash) operation may be separately performed on the IP address of the first interface and the IP address of the second interface to obtain a first hash value and a second hash value. The first hash value is a hash value corresponding to the IP address of the first interface, and the second hash value is a hash value corresponding to the IP address of the second interface. Then, the first hash value and the second hash value are compared. If the first hash value is greater than the second hash value, it may be considered that the IP address of the first interface is greater than the IP address of the second interface, and vice versa.

Certainly, this embodiment of this application is not limited to the foregoing two possible implementations, and a person skilled in the art may determine the implementation based on an actual situation.

In addition, in a possible implementation, after receiving the first message, the first network device may verify a source of the first message by using a secure neighbor discovery (Secure Neighbor Discovery, SEND) technology, to reduce a possibility that the first network device is attacked. For details, refer to RFC3971. Details are not described herein.

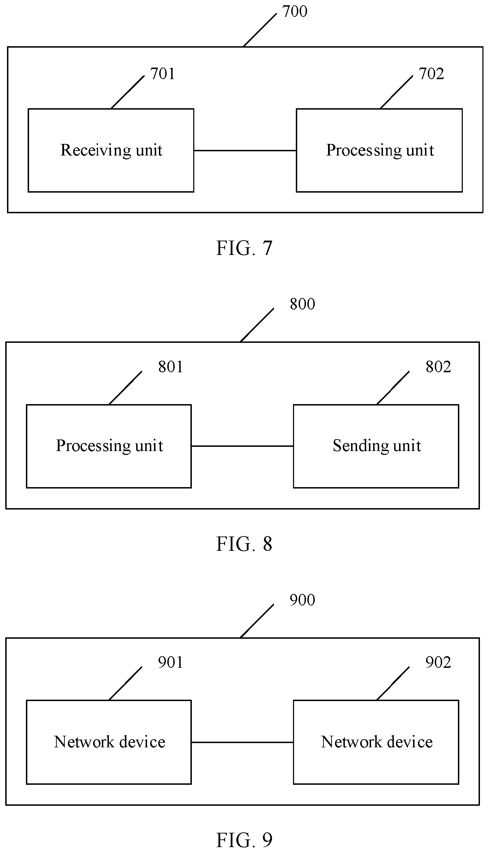

FIG. 7 is a schematic diagram of a possible structure of the first network device in the foregoing embodiments. The first network device 700 may implement functions of the first network device in the instance shown in FIG. 2. Refer to FIG. 7. The network device 700 includes: a receiving unit 701 and a processing unit 702. These units may perform corresponding functions of the first network device in the foregoing method examples. The receiving unit 701 is configured to support the first network device 700 in performing S103 in FIG. 2. The processing unit 702 is configured to support the first network device 700 in performing S104 in FIG. 2, and/or another process performed by the first network device in the technology described in this specification. For example, the receiving unit 701 is configured to perform various receiving operations performed by the first network device in the foregoing method embodiments; and the processing unit 702 is configured to perform various processing operations of the first network device in the foregoing method embodiments. For example, the receiving unit 701 is configured to receive a first message from a second network device, where the first message includes configuration information corresponding to a first interface; and the processing unit 702 is configured to establish a border gateway protocol BGP session with the second network device based on the configuration information corresponding to the first interface. For a specific execution process, refer to the detailed descriptions of corresponding steps in the foregoing embodiment shown in FIG. 2. Details are not described herein again.

FIG. 8 is a schematic diagram of a possible structure of the second network device in the foregoing embodiments. The second network device 800 may implement functions of the second network device in the instance shown in FIG. 2.

Refer to FIG. 8. The network device 800 includes: a processing unit 801 and a sending unit 802. These units may perform corresponding functions of the second network device in the foregoing method examples. The processing unit 801 is configured to support the second network device 800 in performing S101 in FIG. 2. The sending unit 702 is configured to support the second network device 800 in performing S102 in FIG. 2, and/or another process performed by the second network device in the technology described in this specification. For example, the processing unit 801 is configured to obtain configuration information corresponding to a first interface; and the sending unit 802 is configured to send a first message to a first network device, where the first message includes the configuration information corresponding to the first interface. For a specific execution process, refer to the detailed descriptions of corresponding steps in the foregoing embodiment shown in FIG. 2. Details are not described herein again.

It should be noted that, in embodiments of this application, division into the units is an example, and is merely a logical function division. In actual implementation, another division manner may be used. Functional units in embodiments of this application may be integrated into one processing unit, or each of the units may exist alone physically, or two or more units are integrated into one unit. For example, in the foregoing embodiment, the obtaining unit and the processing unit may be a same unit or different units. The integrated unit may be implemented in a form of hardware, or may be implemented in a form of a software functional unit.

Refer to FIG. 9. An embodiment of this application provides a network system 900. The system 900 is configured to implement the session establishment method in the foregoing method embodiment. The system 900 includes a network device 901 and a network device 902. The network device 901 may implement functions of the first network device in the embodiment shown in FIG. 2 or functions of the first network device 700 in FIG. 7. The network device 902 may implement functions of the second network device in the embodiment shown in FIG. 2 or functions of the second network device 800 in FIG. 8. For a specific execution process, refer to the detailed descriptions of corresponding steps in the foregoing embodiment shown in FIG. 2. Details are not described herein again.

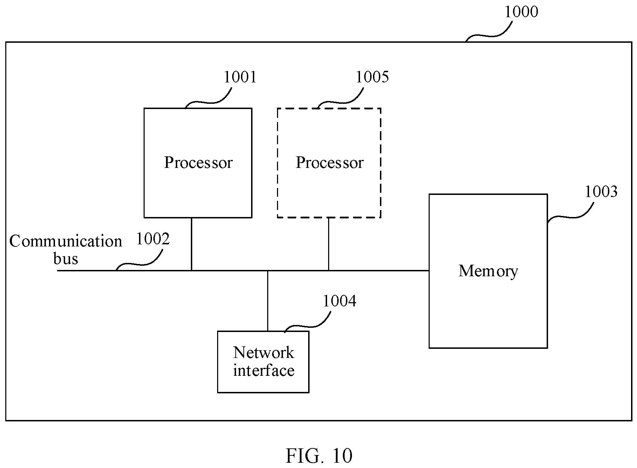

FIG. 10 is a schematic diagram of a structure of a device 1000 according to an embodiment of this application. The network device 700 in FIG. 7 and the network device 800 in FIG. 8 may be implemented by using the device shown in FIG. 10. As shown in FIG. 10, the device 1000 includes at least one processor 1001, a communication bus 1002, and at least one network interface 1004. Optionally, the device 1000 may further include a memory 1003.

The processor 1001 may be a general-purpose central processing unit (central processing unit, CPU), an application-specific integrated circuit (application-specific integrated circuit, ASIC), or one or more integrated circuits (integrated circuits, ICs) for controlling program execution of the solutions of this application. The processor may be configured to process a packet, to implement the session establishment method provided in embodiments of this application. For example, when the first network device in FIG. 2 is implemented by the device shown in FIG. 10, the processor may be configured to: receive a first message from a second network device, and establish a border gateway protocol BGP session with the second network device based on configuration information corresponding to a first interface in the first message. For specific function implementation, refer to a processing part corresponding to the first network device in the method embodiment. For another example, when the second network device in FIG. 2 is implemented by the device shown in FIG. 10, the processor may be configured to: obtain configuration information corresponding to a first interface, and send, to a first network device, a first message including the configuration information corresponding to the first interface. For specific function implementation, refer to a processing part of the second network device in the method embodiment.

The communication bus 1002 is configured to transmit information between the processor 1001, the network interface 1004, and the memory 1003.

The memory 1003 may be a read-only memory (read-only memory, ROM) or another type of static storage device that may store static information and instructions. The memory 1003 may alternatively be a random access memory (random access memory, RAM) or another type of dynamic storage device that may store information and instructions, or may be a compact disc read-only memory (compact disc read-only Memory, CD-ROM) or another optical disc storage, an optical disc storage (including a compact disc, a laser disc, an optical disc, a digital versatile disc, a Blu-ray disc, and the like), a disk storage medium or another magnetic storage device, or any other medium that can be configured to carry or store expected program code in a form of an instruction or a data structure and that can be accessed by a computer. However, the memory is not limited thereto. The memory 1003 may exist alone, and is connected to the processor 1001 through the communication bus 1002. The memory 1003 may alternatively be integrated with the processor 1001.

Optionally, the memory 1003 is configured to store program code or instructions for executing the solutions of this application, and the processor 1001 controls the execution. The processor 1001 is configured to execute the program code or the instructions stored in the memory 1003. The program code may include one or more software modules. Optionally, the processor 1001 may alternatively store the program code or the instructions for executing the solutions of this application. In this case, the processor 1001 does not need to read the program code or the instructions from the memory 1003.

The network interface 1004 may be an apparatus such as a transceiver, and is configured to communicate with another device or a communication network. The communication network may be an Ethernet, a radio access network (RAN), a wireless local area network (wireless local area network, WLAN), or the like. In this embodiment of this application, the network interface 1004 may be configured to receive a packet sent by another node in a segment routing network, or may send a packet to another node in a segment routing network. The network interface 1004 may be an Ethernet (ethernet) interface, a fast Ethernet (fast ethernet, FE) interface, a gigabit Ethernet (gigabit ethernet, GE) interface, or the like.

During specific implementation, in an embodiment, the device 1000 may include a plurality of processors, for example, the processor 1001 and a processor 1005 shown in FIG. 10. Each of the processors may be a single-core (single-CPU) processor, or may be a multi-core (multi-CPU) processor. The processor herein may be one or more devices, circuits, and/or processing cores configured to process data (for example, computer program instructions).

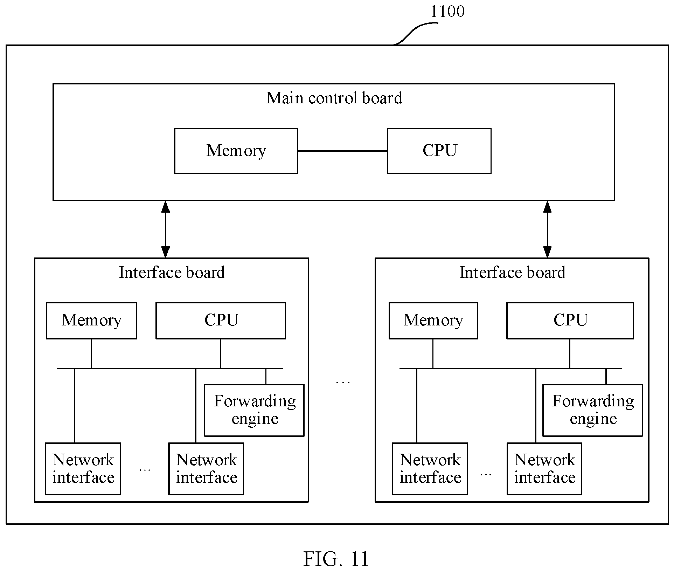

FIG. 11 is a schematic diagram of a structure of a device 1100 according to an embodiment of this application. The first network device and the second network device in FIG. 2 may be implemented by using the device shown in FIG. 11. Refer to the schematic diagram of the structure of the device shown in FIG. 11. The device 1100 includes a main control board and one or more interface boards. The main control board is communicatively connected to the interface board. The main control board is also referred to as a main processing unit (main processing unit, MPU) or a route processor card (route processor card). The main control board includes a CPU and a memory, and is responsible for controlling and managing each component in the device 1100, including route computation, and device management and maintenance functions. The interface board is also referred to as a line processing unit (line processing unit, LPU) or a line card (line card), and is configured to receive and send a packet. In some embodiments, the main control board communicates with the interface board through a bus, or the interface boards communicate with each other through a bus. In some embodiments, the interface boards communicate with each other through a switching board. In this case, the device 1100 also includes a switching board. The switching board is communicatively connected to the main control board and the interface boards, and is configured to forward data between the interface boards. The switching board may also be referred to as a switch fabric unit (switch fabric unit, SFU). The interface board includes a CPU, a memory, a forwarding engine, and an interface card (interface card, IC). The interface card may include one or more network interfaces. The network interface may be an Ethernet interface, an FE interface, a GE interface, or the like. The CPU is communicatively connected to the memory, the forwarding engine, and the interface card. The memory is configured to store a forwarding information table. The forwarding engine is configured to forward a received packet based on the forwarding information table stored in the memory. If a destination address of the received packet is an IP address of the device 1100, the forwarding engine sends the packet to the CPU of the main control board or the CPU of the interface board for processing. If a destination address of the received packet is not an IP address of the device 1100, the forwarding engine searches the forwarding information table based on the destination address. If a next hop and an outbound interface that correspond to the destination address are found from the forwarding information table, the forwarding engine forwards the packet to the outbound interface corresponding to the destination address. The forwarding engine may be a network processor (network processor, NP). The interface card, also referred to as a subcard, may be installed on the interface board. The interface card is responsible for converting an optical/electrical signal into a data frame, checking validity of the data frame, and forwarding the data frame to the forwarding engine for processing or the CPU of the interface board. In some embodiments, the CPU may also perform a function of the forwarding engine, for example, implementing software forwarding based on a general-purpose CPU, so that no forwarding engine is required in the interface board. In some embodiments, the forwarding engine may be implemented by using an ASIC or a field programmable gate array (field programmable gate array, FPGA). In some embodiments, the memory that stores the forwarding information table may alternatively be integrated in the forwarding engine, and is used as a part of the forwarding engine.

An embodiment of this application further provides a chip system, including a processor. The processor is coupled to a memory, and the memory is configured to store a program or instructions. When the program or the instructions are executed by the processor, the chip system is enabled to implement the method of the first network device or the second network device in the embodiment shown FIG. 2.

Optionally, there may be one or more processors in the chip system. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be an FPGA, an ASIC, a system on chip (system on chip, SoC), a CPU, an NP, a digital signal processing circuit (digital signal processor, DSP), a micro controller unit (micro controller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium, including instructions. When the instructions are run on a computer, the computer is enabled to perform the methods in embodiments.

In the specification, claims, and accompanying drawings of this application, the terms "first", "second", "third", "fourth", and the like are intended to distinguish between similar objects but do not need to be used to describe a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In this application, "at least one item (piece)" means one or more, and "a plurality of" means two or more. "At least one (one piece) of the following" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In this application, it is considered that "A and/or B" includes only A, only B, and A and B.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, unit division is merely logical module division, and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be obtained based on actual requirements to achieve the objectives of the solutions of embodiments. In addition, module units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effects of this application are further described in detail in the foregoing specific implementations. It should be understood that the foregoing descriptions are merely specific implementations of this application.

## Claims

1. A Z Border Gateway Protocol session establishment method, wherein the method comprises:
receiving (S103), by a first network device, a first message from a second network device, wherein the first message comprises configuration information corresponding to a first interface, the second network device is connected to the first network device through the first interface, and the configuration information corresponding to the first interface comprises an Internet Protocol, IP, address of the first interface; and
establishing (S104), by the first network device, a Border Gateway Protocol, BGP, session with the second network device based on the configuration information corresponding to the first interface, wherein the method further comprises:
sending, by the first network device, a second message to the second network device, wherein the second message comprises configuration information corresponding to a second interface, the first network device is connected to the second network device through the second interface, and the configuration information corresponding to the second interface comprises an IP address of the second interface, so that the second network device completes establishment of the BGP session with the first network device based on the IP address of the second interface.

2. The method according to claim 1, wherein the first message further comprises indication information, and the indication information indicates the first network device to establish the BGP session with the second network device based on the configuration information corresponding to the first interface.

3. The method according to claim 1 or 2, wherein the first message is a neighbor discovery, ND, message.

4. The method according to claim 3, wherein the ND message comprises a neighbor advertisement, NA, message or a router advertisement, RA, message.

5. The method according to claim 3 or 4, wherein the configuration information corresponding to the first interface is carried in a type length value, TLV, of the ND message.

6. The method according to any one of claims 1 to 5, wherein before the establishing (S104), by the first network device, a BGP session with the second network device based on the configuration information corresponding to the first interface, the method further comprises:
determining, by the first network device, that a priority of the first network device is higher than a priority of the second network device.

7. The method according to claim 6, wherein the first message further comprises the priority of the second network device.

8. A Border Gateway Protocol session establishment method, wherein the method comprises:
obtaining (S101), by a second network device, configuration information corresponding to a first interface, wherein the second network device is connected to a first network device through the first interface, and the configuration information corresponding to the first interface comprises an internet protocol IP address of the first interface; and
sending (S102), by the second network device, a first message to the first network device, wherein the first message comprises the configuration information corresponding to the first interface, and the configuration information corresponding to the first interface is used by the first network device to establish a border gateway protocol, BGP, session with the second network device;
receiving, by the second network device, a second message from the first network device, wherein the second message comprises configuration information corresponding to a second interface, the first network device is connected to the second network device through the second interface, and the configuration information corresponding to the second interface comprises an IP address of the second interface, so that the second network device completes establishment of the BGP session with the first network device based on the IP address of the second interface.

9. The method according to claim 8, wherein the first message further comprises indication information, and the indication information indicates the first network device to establish the BGP session with the second network device based on the configuration information corresponding to the first interface.

10. The method according to claim 8 or 9, wherein the first message is a neighbor discovery, ND, message.

11. The method according to claim 10, wherein the ND message comprises a neighbor advertisement, NA, message or a router advertisement RA message.

12. The method according to claim 10 or 11, wherein the configuration information of the first interface is carried in a type length value, TLV, of the ND message.

13. A first network device (700), wherein the first network device is configured to perform any one of the claims 1-7.

14. A second network device (800), wherein the second network device is configured to perform any one of the claims 8-12.

## Patentansprüche

1. Verfahren zum Herstellen einer Border-Gateway-Protocol-Sitzung, wobei das Verfahren Folgendes umfasst:
Empfangen (S103) einer ersten Nachricht von einer zweiten Netzwerkvorrichtung durch eine erste Netzwerkvorrichtung, wobei die erste Nachricht Konfigurationsinformation umfasst, die einer ersten Schnittstelle entspricht, die zweite Netzwerkvorrichtung mit der ersten Netzwerkvorrichtung über die erste Schnittstelle verbunden ist, und die Konfigurationsinformation, die der ersten Schnittstelle entspricht, eine Internetprotokoll, IP, -Adresse der ersten Schnittstelle umfasst; und
Herstellen (S104) einer BGP-Sitzung mit der zweiten Netzwerkvorrichtung durch die erste Netzwerkvorrichtung basierend auf der Konfigurationsinformation, die der ersten Schnittstelle entspricht, wobei das Verfahren ferner Folgendes umfasst:
Senden, durch die erste Netzwerkvorrichtung, einer zweiten Nachricht an die zweite Netzwerkvorrichtung, wobei die zweite Nachricht Konfigurationsinformation umfasst, die einer zweiten Schnittstelle entspricht, die erste Netzwerkvorrichtung mit der zweiten Netzwerkvorrichtung über die zweite Schnittstelle verbunden ist, und die Konfigurationsinformation, die der zweiten Schnittstelle entspricht, eine IP-Adresse der zweiten Schnittstelle umfasst, sodass die zweite Netzwerkvorrichtung die Einrichtung der BGP-Sitzung mit der ersten Netzwerkvorrichtung basierend auf der IP-Adresse der zweiten Schnittstelle abschließt.

2. Verfahren nach Anspruch 1, wobei die erste Nachricht ferner Angabeinformation umfasst, und die Angabeinformation die erste Netzwerkvorrichtung anweist, die BGP-Sitzung mit der zweiten Netzwerkvorrichtung basierend auf den der ersten Schnittstelle entsprechenden Konfigurationsinformation herzustellen.

3. Verfahren nach Anspruch 1 oder 2, wobei die erste Nachricht eine Neighbor Discovery-Nachricht, ND, ist.

4. Verfahren nach Anspruch 3, wobei die ND-Nachricht eine Neighbor Advertisement, NA,-Nachricht oder eine Router Advertisement, RA,-Nachricht umfasst.

5. Verfahren nach Anspruch 3 oder 4, wobei die Konfigurationsinformation, die der ersten Schnittstelle entspricht, in einem Typlängenwert, TLV, der ND-Nachricht übertragen wird.

6. Verfahren nach einem der Ansprüche 1 bis 5, wobei das Verfahren vor dem Herstellen (S104) einer BGP-Sitzung durch die erste Netzwerkvorrichtung mit der zweiten Netzwerkvorrichtung basierend auf der Konfigurationsinformation, die der ersten Schnittstelle entspricht, ferner Folgendes umfasst:
Bestimmen, durch die erste Netzwerkvorrichtung, dass eine Priorität der ersten Netzwerkvorrichtung höher als eine Priorität der zweiten Netzwerkvorrichtung ist.

7. Verfahren nach Anspruch 6, wobei die erste Nachricht ferner die Priorität der zweiten Netzwerkvorrichtung umfasst.

8. Verfahren zum Herstellen einer Border-Gateway-Protocol-Sitzung, wobei das Verfahren Folgendes umfasst:
Erhalten (S101) von Konfigurationsinformation, die einer ersten Schnittstelle entspricht, durch eine zweiten Netzwerkvorrichtung, wobei die zweite Netzwerkvorrichtung mit einer ersten Netzwerkvorrichtung über die erste Schnittstelle verbunden ist, und die Konfigurationsinformation, die der ersten Schnittstelle entspricht, eine Internetprotokoll, IP,-Adresse der ersten Schnittstelle umfasst; und
Senden (S102) einer ersten Nachricht an die erste Netzwerkvorrichtung durch die zweite Netzwerkvorrichtung, wobei die erste Nachricht die Konfigurationsinformation umfasst, die der ersten Schnittstelle entspricht, und die Konfigurationsinformation, die der ersten Schnittstelle entspricht, durch die erste Netzwerkvorrichtung verwendet wird, um eine Border-Gateway-Protocol, BGP,-Sitzung mit der zweiten Netzwerkvorrichtung herzustellen;
Empfangen einer zweiten Nachricht von der ersten Netzwerkvorrichtung durch die zweite Netzwerkvorrichtung, wobei die zweite Nachricht Konfigurationsinformation umfasst, die einer zweiten Schnittstelle entspricht, die erste Netzwerkvorrichtung mit der zweiten Netzwerkvorrichtung über die zweite Schnittstelle verbunden ist, und die Konfigurationsinformation, die der zweiten Schnittstelle entspricht, eine IP-Adresse der zweiten Schnittstelle umfasst, sodass die zweite Netzwerkvorrichtung die Herstellung der BGP-Sitzung mit der ersten Netzwerkvorrichtung basierend auf der IP-Adresse der zweiten Schnittstelle abschließt.

9. Verfahren nach Anspruch 8, wobei die erste Nachricht ferner Angabeinformation umfasst, und die Angabeinformation die erste Netzwerkvorrichtung anweist, die BGP-Sitzung mit der zweiten Netzwerkvorrichtung basierend auf der der ersten Schnittstelle entsprechenden Konfigurationsinformation herzustellen.

10. Verfahren nach Anspruch 8 oder 9, wobei die erste Nachricht eine Neighbor Discovery, ND,-Nachricht ist.

11. Verfahren nach Anspruch 10, wobei die ND-Nachricht eine Neighbor Advertisement, NA,-Nachricht oder eine Router Advertisement, RA,-Nachricht umfasst.

12. Verfahren nach Anspruch 10 oder 11 wobei die Konfigurationsinformation der ersten Schnittstelle in einem Typlängenwert, TLV, der ND-Nachricht übertragen wird.

13. Erste Netzwerkvorrichtung (700), wobei die erste Netzwerkvorrichtung dazu konfiguriert ist, einen der Ansprüche 1-7 durchzuführen.

14. Zweite Netzwerkvorrichtung (800), wobei die zweite Netzwerkvorrichtung dazu konfiguriert ist, einen der Ansprüche 8-12 durchzuführen.

## Revendications

1. Procédé d'établissement d'une session de protocole de passerelle frontière, dans lequel le procédé comprend :
la réception (S103), par un premier dispositif de réseau, d'un premier message provenant d'un second dispositif de réseau, dans lequel le premier message comprend des informations de configuration correspondant à une première interface, le second dispositif de réseau est connecté au premier dispositif de réseau à travers la première interface, et les informations de configuration correspondant à la première interface comprennent une adresse de protocole internet, IP, de la première interface ; et
l'établissement (S104), par le premier dispositif de réseau, d'une session de protocole de passerelle frontière, BGP, avec le second dispositif de réseau sur la base des informations de configuration correspondant à la première interface, dans lequel le procédé comprend également :
l'envoi, par le premier dispositif de réseau, d'un second message au second dispositif de réseau, dans lequel le second message comprend des informations de configuration correspondant à une seconde interface, le premier dispositif de réseau est connecté au second dispositif de réseau à travers la seconde interface, et les informations de configuration correspondant à la seconde interface comprennent une adresse IP de la seconde interface, de sorte que le second dispositif de réseau termine l'établissement de la session BGP avec le premier dispositif de réseau sur la base de l'adresse IP de la seconde interface.

2. Procédé selon la revendication 1, dans lequel le premier message comprend également des informations d'indication, et les informations d'indication indiquent au premier dispositif de réseau d'établir la session BGP avec le second dispositif de réseau sur la base des informations de configuration correspondant à la première interface.

3. Procédé selon la revendication 1 ou 2, dans lequel le premier message est un message de découverte de voisinage, ND.

4. Procédé selon la revendication 3, dans lequel le message ND comprend un message d'annonce de voisinage, NA, ou un message d'annonce de routeur, RA.

5. Procédé selon la revendication 3 ou 4, dans lequel les informations de configuration correspondant à la première interface sont transportées dans une valeur de longueur type, TLV, du message ND.

6. Procédé selon l'une quelconque des revendications 1 à 5, dans lequel, avant l'établissement (S104), par le premier dispositif de réseau, d'une session BGP avec le second dispositif de réseau sur la base des informations de configuration correspondant à la première interface, le procédé comprend également :
la détermination, par le premier dispositif de réseau, selon laquelle une priorité du premier dispositif de réseau est supérieure à une priorité du second dispositif de réseau.

7. Procédé selon la revendication 6, dans lequel le premier message comprend également la priorité du second dispositif de réseau.

8. Procédé d'établissement d'une session de protocole de passerelle frontière, dans lequel le procédé comprend :
l'obtention (S101), par un second dispositif de réseau, d'informations de configuration correspondant à une première interface, dans lequel le second dispositif de réseau est connecté au premier dispositif de réseau à travers la première interface, et les informations de configuration correspondant à la première interface comprennent une adresse de protocole internet, IP, de la première interface ; et
l'envoi (S102), par le second dispositif de réseau, d'un premier message au premier dispositif de réseau, dans lequel le premier message comprend les informations de configuration correspondant à la première interface, et les informations de configuration correspondant à la première interface sont utilisées par le premier dispositif de réseau pour établir une session de protocole de passerelle frontière, BGP, avec le second dispositif de réseau ;
la réception, par le second dispositif de réseau, d'un second message provenant du premier dispositif de réseau, dans lequel le second message comprend des informations de configuration correspondant à une seconde interface, le premier dispositif de réseau est connecté au second dispositif de réseau à travers la seconde interface, et les informations de configuration correspondant à la seconde interface comprennent une adresse IP de la seconde interface, de sorte que le second dispositif de réseau termine l'établissement de la session BGP avec le premier dispositif de réseau sur la base de l'adresse IP de la seconde interface.

9. Procédé selon la revendication 8, dans lequel le premier message comprend également des informations d'indication, et les informations d'indication indiquent au premier dispositif de réseau d'établir la session BGP avec le second dispositif de réseau sur la base des informations de configuration correspondant à la première interface.

10. Procédé selon l'une quelconque des revendications 8 ou 9, dans lequel le premier message est un message de découverte de voisinage, ND.

11. Procédé selon la revendication 10, dans lequel le message ND comprend un message d'annonce de voisinage, NA, ou un message d'annonce de routeur, RA.

12. Procédé selon l'une quelconque de la revendication 10 ou 11, dans lequel les informations de configuration de la première interface sont transportées dans une valeur de longueur type, TLV, du message ND.

13. Premier dispositif de réseau (700), dans lequel le premier dispositif de réseau est configuré pour mettre en œuvre l'une quelconque des revendications 1 à 7.

14. Second dispositif de réseau (800), dans lequel le second dispositif de réseau est configuré pour mettre en œuvre l'une quelconque des revendications 8 à 12.
